Europäisches Patentamt

European Patent Office

Office européen des brevets

(11) Publication number: **0 312 167**

**A2**

## (12) EUROPEAN PATENT APPLICATION

(21) Application number: **88202256.9**

(22) Date of filing: **10.10.88**

(51) Int. Cl.⁴: **B29C 67/14 , B29C 67/24 , B29C 53/58**

(30) Priority: **12.10.87 NL 8702423**

(43) Date of publication of application:
**19.04.89 Bulletin 89/16**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **van de Kerke, Willem Jan**
**Drostenbos 5**
**NL-8325 PJ Vollenhove(NL)**

(54) **Laminate structure.**

(57) The invention relates to a process for the production of a laminate structure comprising two cover layers based on unsaturated polyester and fibrous material sandwiching a layer with a relatively low density based on unsaturated polyester by applying the core layer to a first cover layer, and is characterized in that the core layer consists of fibrous material covered with a film of unsaturated polyester, the polyester being at least partially cured using a light sensitive initiator system, and then applying a second cover layer.

FIG. 2

EP 0 312 167 A2

## LAMINATE STRUCTURE

The invention relates to a process for the production of a laminate structure that comprises two cover layers based on unsaturated polyester and fibrous material, sandwiching a core layer with a relatively low density based on unsaturated polyester, by applying on a first cover layer the core layer.

Such a laminate structure is described in US-A-4323623. The core layer consists of hollow glass beads and thermosetting material in a weight ratio of 60/40. The core layer serves to keep the two cover layers apart and to prevent the two cover layers from moving with respect to one another. For this reason, the bond between the core layer and the cover layers must be very good and the core layer must have great pressure resistance. Of course, the aim is to make the laminate structure as lightweight as possible. The invention provides a process, giving a laminate structure that is more light-weight, and has a lower percentage of resin in the core layer.

This is achieved according to the invention by a process for the production of a laminate structure comprising two cover layers based on unsaturated polyester and fibrous material sandwiching a layer with a relatively low density based on unsaturated polyester by applying the core layer to a first cover layer, and is characterized in that the core layer consists of fibrous material covered with a film of unsaturated polyester, the polyester being at least partially cured using a light sensitive initiator system, and then applying a second cover layer.

A laminate structure according to the invention comprises only 10-20 wt% thermosetting material in the core layer. Because the thermosetting material is the same in the three layers, the layers adhere very well to one another.

The structure according to the invention can be produced in different manners. In a first preferred embodiment mat-shaped products in a form also known as 'prepregs' are used as cover layers. Prefer ably at least one cover layer transmits light. The relatively thin film of resin that is applied around the fibrous material for the core layer is namely preferably cured with a light-sensible initiator system. This is preferable because with the current thermally sensitive initiators it is difficult to cure thin films of resin completely and/or to a constructive whole. The resin-coated fibrous material can be sprinkled onto a first cover layer to create a lightly stacked structure. The thermosetting resin may then already be partly cured or in a fairly dry and/or rubbery condition. The condition and position of the resin are then such that the resin-coated fibres are in good contact with one another and with the cover layers. It is preferable to already (partly) cure the resin as it is sprinkled. After the second cover layer has been applied, the entire laminate structure is cured further.

A second embodiment that can be applied with great advantage concerns the production of objects by means of 'filament winding' (a winding method employing impregnated filaments). In this method a first cover layer is applied by winding a layer of filaments in a known manner, which layer is, however, relatively thin. The core layer is applied before filaments are wound over the first layer by curing the resin surrounding the filaments to a rubbery condition which is still tacky under the process conditions. Particularly if the filaments are wound crosswise, as is usually the case, hollows of a preprogrammed size are created. In this manner a structure is formed of filaments, resin and air which has a relatively low density. The second cover layer is then wound in the normal manner, after which the entire shape is cured further. Because a light-sensible initiator system is used, the degree of curing can be determined fairly accurately by the amount of irradiation so that the process can be controlled very well.

As polymer an unsaturated polyester may be chosen, but also polymers with acrylate derivative end groups, the so-called vinyl ester polymers. Of course, mixtures of polymers may also be used.

The polymer preferably has a weight average molar mass of between 412 and 8000, more particularly of between 500 and 6000, very specifically of between 700 and 4000.

The polymer usually has an acid number of between 0 and 100, preferably between 0 and 50, particularly between 1 and 25.

The polymer usually has a hydroxyl number of between 0 and 200, preferably between 1 and 100, particularly between 1 and 50. The hydroxyl and acid numbers are defined as the number of mg of KOH per gram of polymer, according to ASTM E 222-73 and ASTM D 1639-70, respectively.

The unsaturated polymers are synthesized mainly from organic compounds containing carboxyl and alcohol groups. Usually diacids and dialcohols are used for polyesters, but up to 40 wt% of both types of difunctional monomers may be replaced by higher-functional monomers or monofunctional monomers or mixtures hereof. Preferably less than 20 wt% of both types of difunctional monomers is replaced by a higher-functional monomer. More in particular, 3-10 wt% of one of both types of difunctional monomers is replaced by a trifunctional monomer to obtain a branched unsaturated polyester. In this manner a higher molar mass is built up within a shorter time.

Preferably, at least one ethylenically unsaturated diacid is used. It may be advantageous to terminate the polyester with an unsaturated monocarboxylic acid.

A special class of polyesters are the vinyl ester polymers. Vinyl ester polymers are composed of polyols and sometimes polyacids, with terminal acrylate groups, methacrylate groups or other acrylates substituted with a $C_2$-$C_4$ alkyl group at position $\beta$. The polyols may be OH-terminated polyesters, novolak resins, phenolic ethers or polyethers or, for example, semi-esters or polyols modified with epoxy, isocyanate, polyamine, etc.

The acids that may be used usually contain fewer than 30 carbon atoms, in particular fewer than 20, more in particular fewer than 10 carbon atoms.

As ethylenically unsaturated diacid an $\alpha,\beta$-ethylenically unsaturated diacid may, for instance, be used, such as a diacid chosen from the group consisting of fumaric acid, maleic acid, chloromaleic acid, itaconic acid, methylglutaric acid, mesaconic acid, citraconic acid or the corresponding esters or anhydrides.

An ethylenically unsaturated mono- or triacid may be chosen from, for instance, the group comprising linoleic acid, or the other unsaturated fatty acids, cinnamic acid, atropic acid, acrylic acid, methacrylic acid, ethacrylic acid, propacrylic acid, crotonic acid, isocrotonic acid or corresponding ester or anhydride derivatives.

Other diacids are preferably saturated aliphatic or aromatic diacids. Aliphatic and aromatic diacids are chosen from, for example, the group comprising succinic acid, glutaric acid, methylglutaric acid, adipic acid, sebacic acid, pimelic acid, phthalic acid, isophthalic acid, terephthalic acid, dihydrophthalic acid, tetrahydrophthalic acid, tetrachlorophthalic acid, 3,6-endomethylene-1,2,3,6-tetrahydrophthalic acid and hexachloroendomethylene tetrahydrophthalic acid or the corresponding ester or anhydride derivatives.

Preferably 5-50% aromatic carboxylic acids are used, for optimum mechanical properties.

Mono- and/or higher-functional aromatic or aliphatic carboxylic acids are chosen from, for example, the group consisting of benzoic acid, ethylhexanoic acid, mono- or trimeric fatty acids such as stearic acid, acetic acid, propionic acid, pivalic acid, valeric acid, trimellitic acid, 1,2,3,4-butanetetracarboxylic acid, 1,2,4,5-benzenetetracarboxylic acid, 1,4,5,8-naphthalenetetracarboxylic acid, 1,2,3-propanetricarboxylic acid, 1,2,3-butanetricarboxylic acid, camphoric acid, naphthoic acid, toluic acid or the corresponding ester or anhydride derivatives.

The alcohols that may be used usually contain fewer than 30 carbon atoms, in particular fewer than 20 carbon atoms. Preferably, saturated aliphatic alcohols or alcohols containing an aromatic group are used; also ethylenically unsaturated alcohols may be used. Dialcohols are chosen from, for example, the group consisting of ethylene glycol, di(ethylene glycol), tri(ethylene glycol), 1,2-propanediol, 1,3-propanediol, 1,2-butanediol, 1,3-butanediol, 1,4-butanediol, 2-methyl-1,3-propanediol, 1,4-pentanediol, 1,4-hexanediol, 1,6-hexanediol, 2,2-dimethylpropanediol, cyclohexanediol, 2,2-bis-(hydroxycyclohexyl)-propane, 1,2-trimethylolpropane monoallyl ether, pinacol, 2,2,4-trimethylpentanediol-1,3, 3-methylpentanediol-1,5, bisphenol A ethoxylated or propoxylated with 1-3 equivalents and novolak prepolymers, if so desired partly etherified and ethoxylated. Instead of a 1,2-diol the corresponding oxirane compound may also be used.

Mono- and higher-functional alcohols are chosen from, for example, the group consisting of methanol, ethanol, 1- or 2-propanol, 1- or 2-butanol, one of the isomers of pentanol, hexanol, octanol, 2-ethylhexanol, fatty alcohols, benzylalcohols, 1,2-di-(allyloxy)-3-propanol, glycerol, 1,2,3-propanetriol, pentaerythrytol, tris(hydroxyethyl)isocyanurate and novolak prepolymers, if so desired partly etherified and ethoxylated. Instead of 1,2-diol the corresponding oxirane compound may be used.

It is also possible to choose di- and/or higher-functional alcohols with more than 30 carbon atoms. These preferably have a molar mass of less than 5000, more in particular of less than 2000, but more than 400. Di- and/or higher-functional alcohols with a molar mass of more than 400 are chosen from, for example, the group comprising polyethylene glycols, polypropylene glycols, addition products of ethylene oxide and/or propylene oxide with bisphenol A, or phenolformaldehyde (pre)polymers, which are preferably epoxidized.

Preferably an unsaturated polyester modified with dicyclopentadienyl (DCPD) units is used. This increases the glass-transition temperature (Tg) of the object obtained. Preferably an unsaturated polyester with 2-45 wt%, more in particular with 20-35 wt%, DCPD is used. It is also possible to modify the polymer with imide and/or amide groups to further increase the Tg. Diamines and alcohol amines may be used for this purpose.

The unsaturated polyesters can be produced in many ways, for example by melt condensation, solvent condensation with distillative removal of water, whether or not in an azeotropic mixture, by epoxy-acid reactions and other methods known to a person skilled in the art. Vinyl ester polymers may also be prepared as described in US-A-3179623, US-A-3301743, US-A-3367992 and US-A-3947422.

Preferably, 10-80 wt% polymer is used, in particular 20-70 wt% of the curable mixture.

The compound containing one or more vinyl groups usually contains fewer than 50 carbon atoms, preferably fewer than 30, and more in particular fewer than 15, but more than 3 carbon atoms. The compound containing a vinyl group (or groups) is preferably fluid at room temperature, so that the resin/monomer mixture has a low viscosity at room temperature. However, since the resin/monomer mixture may also be processed at increased temperature, this is certainly not necessary. Preferably the compound containing one or more vinyl groups is of the vinyl aromatic, vinyl ether, vinyl ester, acrylate and/or allyl type. More in particular, an acrylate or vinyl aromatic compound is used, because these react quickly in the polymerization reaction.

Vinyl aromatic compounds may be chosen from, for instance, the group consisting of styrene, -methylstyrene, o-, m-, p-methylstyrene, p-chlorostyrene, t-butylstyrene, divinylbenzene, bromostyrene, vinylnaphthalene, -chlorostyrene and divinylnaphthalene.

Acrylate compounds are chosen from, for instance, the group consisting of methyl, ethyl, propyl, isopropyl, butyl, isobutyl, phenyl or benzyl acrylate or methacrylate, 2-ethylhexyl (meth)-acrylate, dihydrodicyclopentadiene acrylate, cyclohexyl (meth)acrylate, butanediol (meth)-acrylate, (meth)acrylamide, butanediol di(meth)-acrylate, the reaction products of (meth)acrylic acid and phenyl or cresylglycidyl ethers, propylene glycol di(meth)acrylate, di- and triethylene glycol di-(meth)acrylate, di- and tripropyleneglycol di(meth)-acrylate, hexanedioldi(meth)acrylate, trimethylolpropanetri(meth)acrylate. Derivatives of acrylates substituted with $C_2$-$C_4$ at position $\beta$ may also be used.

Vinyl ether, vinyl ester and allyl compounds are chosen from, for instance, the group comprising allylphthalate, triallylcyanurate, diallylisophthalate, diallylterephthalate, diallylphthalate, vinyl ethylhexanoate, vinyl acetate, vinyl propionate, vinyl pivalate, vinyl ether, vinyl propylol ether, vinyl butylol ether and vinyl benzylalcohol ethers.

The compound containing one or more vinyl groups is preferably used in an amount of 20-90 wt%, in particular 30-80 wt% of the curable mixture.

Furthermore, the compound preferably contains one or more anti-oxidants such as hydroxybenzophenone, esters of salicylic acid and hydroxyphenylbenzotriazoles.

Additionally, the curable mixture preferably contains one or more inhibitors in amounts between 0.005 and 0.2, preferably between 0.01 and 0.1 wt% with respect to the curable mixture. Known inhibitors that may be used are: hydroquinone, 2,6-dimethylhydroquinone, p-t-butylcatechol, p-benzoquinone, chloranil, 2,6-dimethylquinone, nitrobenzene, m-dinitrobenzene, thiodiphenylamine, salts of N-nitro-N-cyclohexylhydroxylamine, 2,3-dichloro-5,6-dicyano-p-benzoquinone, copper naphthanate, 1,2-naphthoquinone.

Preferably, a photo-initiator system is used because this can realize a controlled and rapid curing process. There are many types of suitable photo-initiator systems, such as those described in DE-A-1694149, US-A-3715293, EP-A-7086, US-A-4071424, EP-A-185423 and EP-A-97012. Photo-initiator systems are usually used in amounts between 0.01 and 10 wt%, preferably between 0.1 and 4 wt%.

Preferably use is made of a system that is sensible to light with a wavelength of 280-800 nm, preferably 360-500 nm and more in particular 380-460 nm.

A heat-sensitive initiator system, normally used in amounts between 0.1 and 5 wt%, may also be used, particularly in cover layers, if so desired combined with a light-sensible initiator system. A cold-setting or a hot-setting thermally sensitive initiator system may be used, which is preferably chosen from the group comprising peroxides, perketals and percarbonates. Examples of these are hydrogen peroxide, benzoyl peroxide, t-butyl peroxide, t-butyl peroctoate, t-butyl perbenzoate, dicumyl peroxide, di-t-butyl peroxide, trimethylcyclohexanone perketal, methylethyl ketone peroxide, acetylacetone peroxide, cyclohexanone peroxide, methylisobutyl ketone peroxide and diacetone alcohol peroxide. Additionally, catalysts may be added, such as octoates or naphthenates of copper, lead, calcium, magnesium, cerium and in particular of manganese and cobalt, or vanadium complexes. Promoters such as acetylacetone may be added to these accelerators. Aro matic amines such as dimethylaniline, diethylaniline or dimethylparatoluidine may also be used as catalysts.

As fibrous material glass fibres, polyester fibres, acrylic fibres, aramid fibres and carbon fibres may, for instance, be used. Preferably glass fibre is used, but for special applications carbon or aramid fibres may also be advantageous.

The fibrous material coated with unsaturated polyester resin can be simply produced by passing fibrous material through a polyester resin bath and using it immediately. The resin can also be brought into a thickened condition immediately, for example hy reacting it with isocyanate, by partly curing it or otherwise. It may be advantageous to produce the fibrous material in special shapes. If, for example, bundles of glass fibres are drawn through a head crosswise and then impregnated with resin and partly cured, a laminate structure according to the invention can be produced very quickly.

The invention will be elucidated with the aid of the following figures.

Figure 1: laminate of two cover layers and short glass fibres;

Figure 2: laminate produced with the filament winding technique;

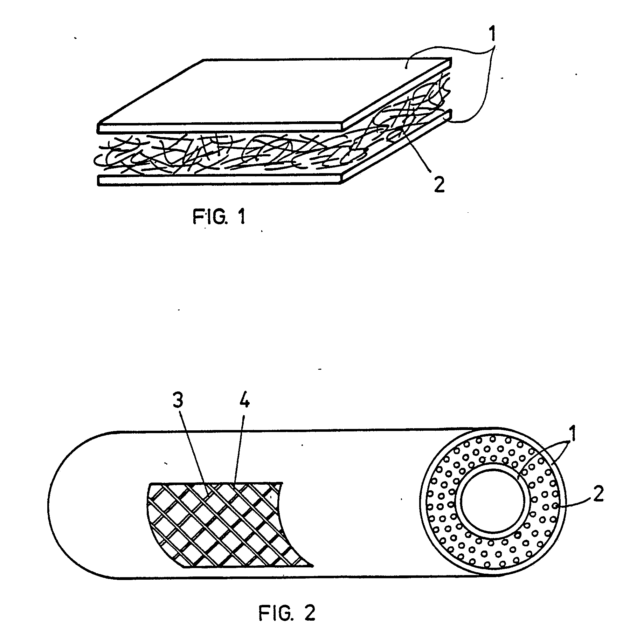

In the figures, (1) represents the cover layers and (2) the glass fibres. In a laminate as shown in Figure 1 the fibres are arbitrarily oriented. In a laminate according to figure 2 the filaments are always wound crosswise as schematically represented. In this figure, (3) represents the first layer of filaments and (4) the second layer. The filaments are spaced about 1 - 2 mm apart, so that some room remains between them and hollows are created.

## Claims

1. Process for the production of a laminate structure comprising two cover layers based on unsaturated polyester and fibrous material sandwiching a layer with a relatively low density based on unsaturated polyester by applying the core layer to a first cover layer, characterized in that the core layer consists of fibrous material covered with a film of unsaturated polyester, the polyester being at least partially cured using a light sensitive initiator system, and then applying a second cover layer.

2. Process according to claim 1, characterized in that the core layer is applied by sprinkling fibres saturated with a film of thermosetting material to create a lightly stacked structure.

3. Process according to claim 1, characterized in that layers are applied by means of a filament winding method, and that during the application of the core layer, the resin with which the fibrous material is impregnated is partly cured before filaments are wound.

4. Process according to claim 3, characterized in that the fibrous material is wound crosswise.

5. Process according to any one of claims 1-4, characterized in that the resin used to impregnate the fibrous material is partly cured with light, with the aid of a light-sensible initiator system.

6. Product obtained by allowing a laminate structure obtainable with a process according to any one of claims 1-5 to set.

FIG. 1

FIG. 2